# EUROPÄISCHE PATENTSCHRIFT

(11) **EP 2 274 641 B1**
(45) Veröffentlichungstag und Bekanntmachung des Hinweises auf die Patenterteilung: **10.10.2012**
(21) Anmeldenummer: 09733620.0
(22) Anmeldetag: 08.04.2009
(51) Int. Cl.: G02B 1/11, G02B 1/12

(54) **VERFAHREN ZUR HERSTELLUNG EINES REFLEXIONSMINDERNDEN INTERFERENZSCHICHTSYSTEMS**
METHOD FOR PRODUCING A REFLECTION-REDUCING INTERFERENCE LAYER SYSTEM
PROCÉDÉ POUR LA FABRICATION D'UN SYSTÈME DE COUCHES D'INTERFÉRENCE DIMINUANT LA RÉFLEXION

(30) Priorität: 15.04.2008 DE 102008018866
(43) Veröffentlichungstag der Anmeldung: 19.01.2011
(73) Patentinhaber: Fraunhofer-Gesellschaft zur Förderung der angewandten Forschung e.V., 80686 München (DE)
(72) Erfinder: SCHULZ, Ulrike, 07751 Jena (DE); MUNZERT, Peter, 07743 Jena (DE); KAISER, Norbert, 07745 Jena (DE)
(74) Vertreter: Epping - Hermann - Fischer
(86) Internationale Anmeldenummer: PCT/EP2009/054253
(87) Internationale Veröffentlichungsnummer: WO 2009/127581

(56) Entgegenhaltungen:
- EP-A1- 1 022 587
- EP-A2- 0 989 443
- KALESS ET AL: "NANO-motheye antireflection pattern by plasma treatment of polymers" SURFACE AND COATINGS TECHNOLOGY, ELSEVIER, AMSTERDAM, NL, Bd. 200, Nr. 1-4, 1. Oktober 2005 (2005-10-01), Seiten 58-61, XP005063464 ISSN: 0257-8972
- SCHULZ U ET AL: "Procedures to reduce reflection on polymer surfaces" PROCEEDINGS OF SPIE - THE INTERNATIONAL SOCIETY FOR OPTICAL ENGINEERING - ADVANCEMENTS IN POLYMER OPTICS DESIGN, FABRICATION, AND MATERIALS 2005 SPIE US, Bd. 5872, 2005, Seiten 1-10, XP40207713
- U. SCHULZ ET AL.: "New plasma processes for antireflective structures on plastics" SPIE, PO BOX 10 BELLINGHAM WA 98227-0010 USA, Bd. 7101, 2. September 2008 (2008-09-02), XP040443185

## Beschreibung

Die Erfindung betrifft ein reflexionsminderndes Interferenzschichtsystem und ein Verfahren zu dessen Herstellung.

Zur Entspiegelung von Oberflächen, insbesondere von optischen Elementen oder Displays, werden üblicherweise reflexionsmindernde Interferenzschichtsysteme verwendet, die mehrere alternierende Schichten aus hochbrechenden und niedrigbrechenden Materialien enthalten, verwendet. Als Material mit einem besonders niedrigen Brechungsindex im sichtbaren Spektralbereich wird derzeit MgF₂ mit n = 1,38 eingesetzt. Die Entspiegelungswirkung herkömmlicher dielektrischer Schichtsysteme könnte verbessert werden, wenn Materialien mit geringerem Brechungsindex zur Verfügung stehen würden.

Aus der Druckschrift EP 1791002 A1 ist bekannt, Partikel aus MgF₂ in amorphes Siliziumoxid einzubinden, um eine Schicht mit noch geringerem Brechungsindex zu erzielen.

Weiterhin beschreibt die Druckschrift EP 1403665 A2, hohle Nanopartikel in eine anorganische Siliziumoxidschicht einzubinden, um eine Schicht mit besonders geringem Brechungsindex herzustellen.

Aus der Druckschrift EP 0 989 443 A2 ist eine Entspiegelungsschicht mit einem Interferenzschichtsystem und rauer Oberflächenstruktur bekannt.

Eine alternative Möglichkeit zur Verminderung der Reflexion eines optischen Elements ist aus der Patentschrift DE 10241708 B4 bekannt. Bei diesem Verfahren wird an der Oberfläche eines Kunststoffsubstrats mittels eines Plasmaätzprozesses eine Nanostruktur erzeugt, durch die die Reflexion des Kunststoffsubstrats vermindert wird. Die Entspiegelung eines optischen Elements durch die Erzeugung einer Nanostruktur an dessen Oberfläche hat den Vorteil, dass eine geringe Reflexion über einen weiten Einfallswinkelbereich erzielt wird.

Die Herstellung von Nanostrukturen mittels eines Plasmaätzverfahrens kann bei Kunststoffoberflächen, zum Beispiel aus PMMA oder anderen Thermoplasten sowie weichen Lacken, angewandt werden, ist aber nicht ohne weiteres für härtere Materialien anwendbar.

Breitbandige Entspiegelungen, die weitestgehend unabhängig vom Lichteinfallswinkel sind, wären aber auch für Materialien wie beispielsweise Glas oder Quarz wünschenswert, die nicht ohne weiteres mit einem Plasmaätzverfahren nanostrukturiert werden können.

Der Erfindung liegt die Aufgabe zugrunde, ein verbessertes, vergleichsweise einfaches und kostengünstiges Verfahren zur Herstellung eines reflexionsmindernden Interferenzschichtsystems anzugeben, das sich durch eine geringe Reflexion über einen weiten Wellenlängen- und Einfallswinkelbereich auszeichnet und insbesondere auch auf Materialien wie Glas oder Quarz verwendet werden kann.

Diese Aufgabe wird durch ein Verfahren zur Herstellung eines reflexionsmindernden Interferenzschichtsystems nach Patentanspruch 1 gelöst. Vorteilhafte Ausgestaltungen und Weiterbildungen der Erfindung sind Gegenstand der abhängigen Ansprüche.

Bei dem Verfahren zur Herstellung eines reflexionsmindernden Interferenzschichtsystems gemäß der Erfindung werden mindestens drei alternierende Schichten mit unterschiedlichem Brechungsindex auf ein Substrat aufgebracht. Weiterhin wird eine Schicht aus einem organischen Material oder aus einem organisch-anorganischem Hybridmaterial aufgebracht und nachfolgend eine Nanostruktur in der Schicht aus dem organischen Material oder dem organisch-anorganischem Hybridmaterial mit einem Plasmaätzprozess erzeugt. Die nanostrukturierte Schicht weist einen effektiven Brechungsindex n < 1,3 auf. Besonders bevorzugt beträgt der Brechungsindex n der nanostrukturierten Schicht sogar weniger als 1,25.

Mit einem derart hergestellten Interferenzschichtsystem kann vorteilhaft eine besonders geringe Reflexion über einen weiten Wellenlängenbereich erzielt werden, die weitestgehend unabhängig vom Einfallswinkel des Lichts ist. Dies beruht insbesondere darauf, dass die nanostrukturierte Schicht aus dem organischen Material oder dem organisch-anorganischen Hybridmaterial ein poröse Struktur mit einem sehr geringem effektiven Brechungsindex aufweist, der mit herkömmlichen Materialien für Interferenzschichtsysteme nicht erzielt werden könnte. Insbesondere kann die nanostrukturierte Schicht einen effektiven Brechungsindex aufweisen, der geringer ist als der Brechungsindex n = 1,38 von MgF₂. Unter dem effektiven Brechungsindex ist dabei der über die Schicht gemittelte Brechungsindex zu verstehen, der aufgrund der Nanostrukturierung geringer ist als er bei einer homogenen Schicht aus dem gleichen Material.

Die nanostrukturierte Schicht wird mittels eines Plasmaätzverfahrens nanostrukturiert. Die Erzeugung einer Nanostruktur mittels eines Plasmaätzprozesses ist an sich aus der Patentschrift DE 10241708 B4 bekannt, deren Offenbarungsgehalt diesbezüglich hiermit durch Rückbezug aufgenommen wird.

Die nanostrukturierte Schicht weist bevorzugt eine Dicke zwischen einschließlich 50 nm und einschließlich 150 nm auf. Die Nanostruktur erstreckt sich vorteilhaft von der Oberfläche der nanostrukturierten Schicht aus bis in eine Tiefe von 25 nm oder mehr in die nanostrukturierte Schicht hinein. Besonders bevorzugt erstreckt sich die Nanostruktur von der Oberfläche bis in eine Tiefe von mehr als 50 nm in die nanostrukturierte Schicht hinein. Es ist vorteilhaft, wenn sich die Nanostruktur nahezu durch die gesamte nanostrukturierte Schicht erstreckt. Auf diese Weise wird ein besonders geringer effektiver Brechungsindex der nanostrukturierten Schicht erzielt.

Bei der nanostrukturierten Schicht kann es sich insbesondere um eine durch Plasmapolymerisation hergestellte Schicht handeln. Bei der Plasmapolymerisation werden dampfförmige organische Vorläuferverbindungen (Precursor) in einer Vakuum-Prozesskammer durch ein Plasma zunächst aktiviert. Durch die Aktivierung entstehen ionisierte Moleküle und es bilden sich bereits in der Gasphase erste Molekülfragmente in Form von Clustern oder Ketten. Die anschließende Kondensation dieser Fragmente auf der Substratoberfläche bewirkt dann unter Einwirkung von Substrattemperatur, Elektronen- und/oder Ionenbeschuss die Polymerisation und somit die Bildung einer geschlossenen Schicht. Auf diese Weise hergestellte Polymere werden auch als Plasmapolymere bezeichnet. Die Plasmapolymerschicht kann insbesondere Hexamethyldisiloxan (HMDSO), Allylamin, Allylalkohol, Vilylacetat oder Styrol enthalten.

Weiterhin kann die nanostrukturierte Schicht Parylen, Ormocer, polyurethanhaltigen Lack, Polyamid, Polymethylmethacrylat (PMMA), Silikon, Pentacen oder Polytetrafluorethylen (PTFE) enthalten. Weitere bevorzugte Materialien sind Melamin (2,4,6-Triamino-1,3,5-triazin), alpha-NPD (N,N'-(Di-naphth-1-yl)-N,N'-diphenylbenzidin), NNB (N,N'-Bis(3-methylphenyl)-N,N'-diphenylbenzidin) und TNP (N,N,N',N'-Tetraphenylbenzidin).

Bei einer weiteren Ausgestaltung weist die nanostrukturierte Schicht ein organisches Material, in das anorganische Nanopartikel eingebunden sind, auf.

Die nanostrukturierte Schicht ist vorzugsweise die Deckschicht des Interferenzschichtsystems. In diesem Fall wirkt sich der geringe Brechungsindex der nanostrukturierten Schicht besonders vorteilhaft aus, da auf diese Weise der Brechungsindexunterschied zum Umgebungsmedium, beispielsweise Luft, vermindert wird, sodass eine besonders geringe Reflexion des Interferenzschichtsystems erzielt werden kann.

Um die nanostrukturierte Schicht vor Umgebungseinflüssen, insbesondere einer mechanischen Beschädigung, zu schützen, wird die nanostrukturierte Schicht vorzugsweise mit einer Schutzschicht versehen. Bei der Schutzschicht kann es sich beispielsweise um eine SiO₂-Schicht handeln. Vorzugsweise weist die Schutzschicht eine Dicke von 50 nm oder weniger auf.

Die Anzahl der alternierenden Schichten des Interferenzschichtsystems beträgt vorzugsweise mindestens fünf, besonders bevorzugt mindestens sieben. Durch eine hohe Anzahl von alternierenden Schichten ist es vorteilhaft möglich, eine besonders geringe Reflexion in einem großen Spektralbereich zu erzielen.

Die alternierenden Schichten sind vorzugsweise anorganische Schichten. Insbesondere kann es sich bei den alternierenden Schichten um Oxidschichten wie beispielsweise Siliziumdioxid, Tantalpentoxid oder Titandioxid handeln. Weiterhin können die alternierenden Schichten auch eine oder mehrere Fluorid- oder Nitridschichten enthalten.

Bei einer bevorzugten Variante werden sowohl die alternierenden Schichten und die Schicht aus dem organischen Material oder dem organisch-anorganischem Hybridmaterial jeweils durch ein Vakuumbeschichtungsverfahren aufgebracht. Das Aufbringen der alternierenden Schichten des Interferenzschichtsystems kann beispielsweise durch konventionelles Aufdampfen, ionengestütztes Aufdampfen oder Sputtern erfolgen. Die zur Erzeugung der Nanostruktur vorgesehene zumindest teilweise organische Schicht wird vorzugsweise ebenfalls mit einem Vakuumbeschichtungsverfahren aufgebracht. Insbesondere kann dazu ein PVD-Verfahren wie beispielsweise thermisches Verdampfen eingesetzt werden. Vorzugsweise wird die zumindest teilweise organische Schicht, in der die Nanostruktur erzeugt werden soll, mittels Plasmapolymerisation aufgebracht.

Da auch der nachfolgende Plasmaätzprozess, mit dem die zumindest teilweise organische Schicht strukturiert wird, ein Vakuumprozess ist, kann vorteilhaft das gesamte Interferenzschichtsystem in einem Vakuumprozess hergestellt werden.

Alternativ ist es aber auch möglich, die Schicht aus dem organischen Material oder dem organisch-anorganischem Hybridmaterial durch ein nasschemisches Verfahren aufzubringen und anschließend durch ein Plasmaätzverfahren zu strukturieren.

Bei einer bevorzugten Variante des Verfahrens wird vor der Erzeugung der Nanostruktur in der zumindest teilweise organischen Schicht eine dünne Schicht auf die zumindest teilweise organische Schicht aufgebracht.

Die dünne Schicht kann beispielsweise eine Oxidschicht, eine Nitridschicht oder eine Fluoridschicht sein. Insbesondere kann die dünne Schicht Siliziumoxid, Siliziumnitrid, Titanoxid oder Magnesiumfluorid enthalten.

Die dünne Schicht weist vorteilhaft eine Dicke von nur 2 nm oder weniger auf. Das Aufbringen dieser dünnen Schicht vor der Durchführung des Plasmaätzprozesses hat den Vorteil, dass die dünne Schicht als Initialschicht für den Plasmaätzprozess wirkt und somit das Erzeugen einer Nanostruktur auch in Materialien ermöglicht, bei denen dies ohne die vorherige Aufbringung der dünnen Schicht nur schwer oder gar nicht möglich wäre.

Die Erfindung wird im Folgenden anhand von Ausführungsbeispielen im Zusammenhang mit den Figuren 1 bis 10 näher erläutert.

Es zeigen:
Figuren 1A bis 1E ein Ausführungsbeispiel eines Verfahrens zur Herstellung eines reflexionsmindernden Interferenzschichtsystems anhand von schematisch dargestellten Zwischenschritten,
Figur 2 einen schematisch dargestellten Querschnitt durch ein Ausführungsbeispiel eines mit dem Verfahren gemäß der Erfindung hergestellten reflexionsmindernden Interferenzschichtsystems,
Figur 3 eine grafische Darstellung der Reflexion R in Abhängigkeit von der Wellenlänge λ für die Einfallswinkel 0° und 45° bei einem Ausführungsbeispiel eines mit dem Verfahren gemäß der Erfindung hergestellten reflexionsmindernden Interferenzschichtsystems,
Figur 4 eine schematische Darstellung eines Querschnitts durch ein weiteres Ausführungsbeispiel eines mit dem Verfahren gemäß der Erfindung hergestellten reflexionsmindernden Interferenzschichtsystems
Figur 5 eine grafische Darstellung der Reflexion R in Abhängigkeit von der Wellenlänge λ bei einem weiteren Ausführungsbeispiel eines mit dem Verfahren gemäß der Erfindung hergestellten reflexionsmindernden Interferenzschichtsystems,
Figur 6 eine grafische Darstellung der Reflexion R in Abhängigkeit von der Wellenlänge λ für die Einfallswinkel 0°, 45° und 60° bei einem weiteren Ausführungsbeispiel eines mit dem Verfahren gemäß der Erfindung hergestellten reflexionsmindernden Interferenzschichtsystems,
Figur 7 eine grafische Darstellung der Reflexion R in Abhängigkeit von der Wellenlänge λ für den Einfallswinkel 0° bei einem weiteren Ausführungsbeispiel eines mit dem Verfahren gemäß der Erfindung hergestellten reflexionsmindernden Interferenzschichtsystems,
Figur 8 eine grafische Darstellung der berechneten Reflexion R und der gemessenen Reflexion Rₑₓₚ in Abhängigkeit von der Wellenlänge λ für den Einfallswinkel 0° bei einem weiteren Ausführungsbeispiel eines mit dem Verfahren gemäß der Erfindung hergestellten reflexionsmindernden Interferenzschichtsystems,
Figur 9 eine grafische Darstellung der berechneten Reflexion R und der gemessenen Reflexion Rₑₓₚ in Abhängigkeit von der Wellenlänge λ für den Einfallswinkel 0° bei einem weiteren Ausführungsbeispiel eines mit dem Verfahren gemäß der Erfindung hergestellten reflexionsmindernden Interferenzschichtsystems, und
Figur 10 eine grafische Darstellung der gemessenen Transmission T_{exp,8} des Ausführungsbeispiels der Figur 8 und der gemessenen Transmission T_{exp,9} des Ausführungsbeispiels der Figur 9 in Abhängigkeit von der Wellenlänge λ für den Einfallswinkel 0°.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

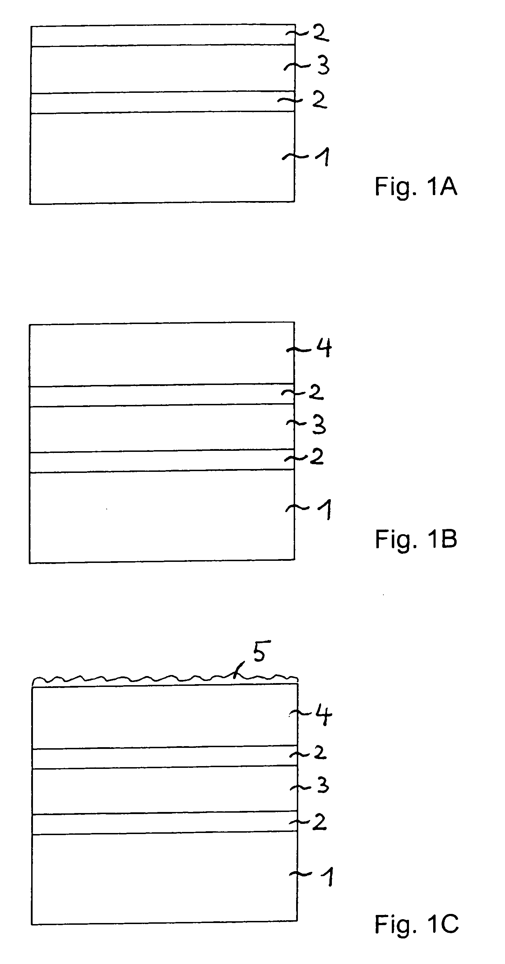

Bei dem in Figur 1A dargestellten ersten Zwischenschritt eines Verfahrens zur Herstellung eines reflexionsmindernden Interferenzschichtsystems sind mehrere Schichten 2, 3, die unterschiedliche Brechungsindizes aufweisen, auf ein Substrat 1 aufgebracht worden. Bei dem Substrat 1 kann es sich insbesondere um ein optisches Element handeln, dessen Oberfläche durch Aufbringen eines reflexionsmindernden Interferenzschichtsystems entspiegelt werden soll. Beispielsweise kann das Substrat 1 eine Linse wie zum Beispiel ein Brillenglas oder die Oberfläche eines Displays sein.

Das Substrat 1 kann insbesondere ein Substrat aus Glas oder Quarz sein, es kann aber auch aus einem Kunststoff gebildet sein. Das Substrat 1 kann beispielsweise einen Brechungsindex von n = 1,5 aufweisen.

Die Schichten 2, 3 des Interferenzschichtsystems weisen vorzugsweise abwechselnd hohe und niedrige Brechungsindizes auf. Dabei werden unter Schichten mit niedrigem Brechungsindex solche Schichten verstanden, die einen Brechungsindex n ≤ 1,7 aufweisen. Unter Schichten mit hohem Brechungsindex werden solche Schichten verstanden, die einen Brechungsindex n > 1,7, insbesondere n > 2,0, aufweisen.

Bei dem Ausführungsbeispiel der Figur 1A sind auf das Substrat 1 eine erste Schicht 2 mit hohem Brechungsindex, eine Schicht 3 mit niedrigem Brechungsindex und eine weitere Schicht 2 mit hohem Brechungsindex nacheinander aufgebracht.

Die Schicht 3 mit niedrigem Brechungsindex kann beispielsweise eine SiO₂-Schicht sein. Die Schichten 2 mit hohem Brechungsindex können beispielsweise TiO₂-Schichten sein.

Die alternierenden Schichten 2, 3 werden vorzugsweise mittels eines Vakuumbeschichtungsverfahrens nacheinander aufgebracht. Insbesondere können die Schichten 2, 3 durch ein PVD-Verfahren, wie beispielsweise konventionelle Verdampfung, ionengestützte Verdampfung oder Sputtern, aufgebracht werden.

Bei dem in Figur 1B dargestellten Zwischenschritt ist auf die alternierenden Schichten 2, 3 eine Schicht 4 aus einem organischen Material oder einem organisch-anorganischem Hybridmaterial aufgebracht worden. Die zumindest teilweise organische Schicht 4 kann insbesondere Hexamethyldisiloxan (HMDSO), Allylamin, Allylalkohol, Vilylacetat, Styrol, Parylen, Ormocer, polyurethanhaltigen Lack, Polyamid, Polymethylmethacrylat (PMMA), Silikon, Pentacen oder Polytetrafluorethylen (PTFE) enthalten. Weitere geeignete Materialien sind Melamin (2,4,6-Triamino-1,3,5-triazin), alpha-NPD (N,N'-(Di-naphth-1-yl)-N,N'-diphenylbenzidin), NNB (N,N'-Bis(3-methylphenyl)-N,N'-diphenylbenzidin) und TNP (N,N,N',N'-Tetraphenylbenzidin).

Die zumindest teilweise organische Schicht 4 wird vorzugsweise wie die darunter liegenden alternierenden Schichten 2, 3 mit einem Vakuumbeschichtungsverfahren aufgebracht. Zum Beispiel kann zum Aufbringen der zumindest teilweise organischen Schicht 4 ein PVD- oder ein CVD-Verfahren eingesetzt werden. Insbesondere kann die Herstellung der zumindest teilweise organischen Schicht 4 mittels thermischen Verdampfens oder mittels eines Plasmapolymerisationsverfahrens erfolgen.

Alternativ ist es aber auch möglich, die zumindest teilweise organische Schicht 4 mit einem nasschemischen Verfahren aufzubringen.

Nach dem Aufbringen der zumindest teilweise organischen Schicht 4 wird vorzugsweise, wie in Figur 1C dargestellt, eine dünne Schicht 5 aufgebracht, die als Initialschicht für einen nachfolgenden Plasmaätzprozess dient. Die dünne Schicht 5 ist vorzugsweise eine Oxidschicht, eine Nitridschicht oder eine Fluoridschicht. Insbesondere ist eine dünne Schicht 5 aus TiO₂, SiO₂, MgF₂ oder aus einem Siliziumnitrid geeignet.

Die dünne Schicht 5 weist bevorzugt eine Dicke von 2 nm oder weniger, besonders bevorzugt von 1,5 nm oder weniger auf. Bei einer so geringen Dicke befindet sich die dünne Schicht noch im Anfangsstadium ihres Wachstums und kann daher ungleichmäßig dick sein. Unter der Dicke der dünnen Schicht 5 wird deshalb eine über die dünne Schicht 5 gemittelte Dicke verstanden. Die mittlere Dicke der dünnen Schicht 5 kann beim Aufwachsen beispielsweise mit einem kalibrierten Schwingquarzmesssystem bestimmt werden, wobei die mittlere Schichtdicke aus der aufgebrachten Masse berechnet wird. Die mittlere Dicke der dünnen Schicht 5 entspricht der Dicke einer gleichmäßig dicken Schicht, die die gleiche Masse wie die tatsächlich aufgebrachte ungleichmäßig dicke Schicht aufweist.

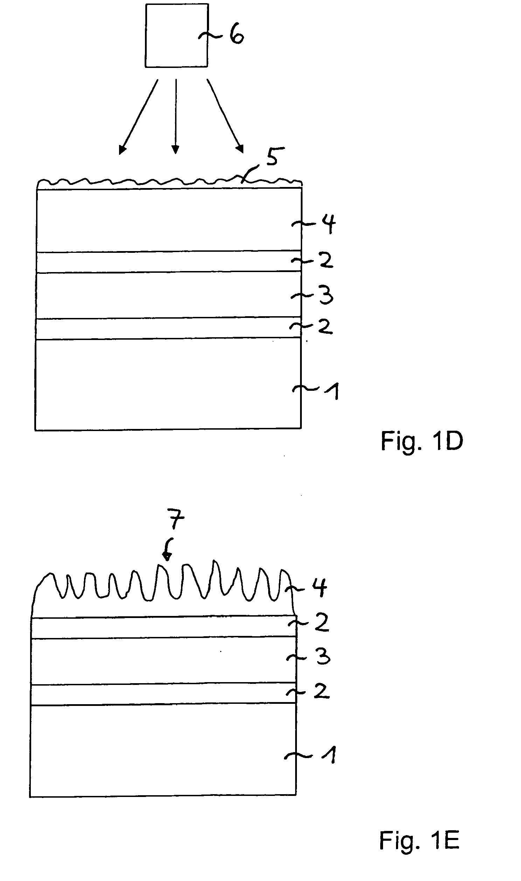

Nach dem Aufbringen der dünnen Schicht 5 wird, wie in Figur 1D dargestellt, ein Plasmaätzprozess durchgeführt, um eine Nanostruktur in der zumindest teilweise organischen Schicht 4 zu erzeugen. Die Erzeugung der Nanostruktur erfolgt vorzugsweise durch Ionenbeschuss mittels einer Plasma-Ionenquelle 6. Dabei kann beispielsweise ein Argon-Sauerstoff-Plasma verwendet werden. Ein derartiges Plasmaätzverfahren ist an sich aus der Druckschrift DE 10241708 B4 bekannt und wird daher an dieser Stelle nicht näher erläutert.

In Figur 1E ist das reflexionsmindernde Interferenzschichtsystem nach der Erzeugung einer Nanostruktur 7 in der zumindest teilweise organischen Schicht 4 dargestellt. Die Nanostruktur 7 erstreckt sich vorteilhaft von der Oberfläche der zumindest teilweise organischen Schicht 4 bis in eine Tiefe von 25 nm oder mehr, bevorzugt von 50 nm oder mehr, in die teilweise organische Schicht 4 hinein. Aufgrund der Nanostrukturierung weist die teilweise organische Schicht 4 vorteilhaft einen sehr geringen Brechungsindex auf. Der Brechungsindex der zumindest teilweise organischen Schicht 4 beträgt n = 1,3 oder weniger, besonders bevorzugt n = 1,25 oder weniger.

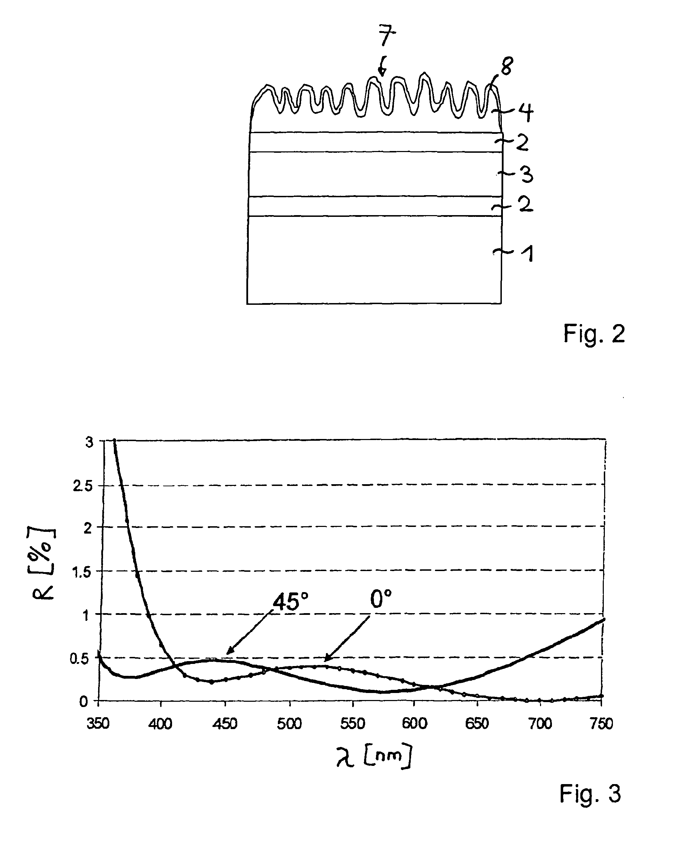

Das in Figur 2 dargestellte mit dem Verfahren gemäß der Erfindung hergestellte reflexionsmindernde Interferenzschichtsystem entspricht im Wesentlichen dem in Figur 1E dargestellten Ausführungsbeispiel. Es unterscheidet sich von dem in Figur 1E dargestellten Ausführungsbeispiel dadurch, dass zusätzlich eine Schutzschicht 8 auf die Nanostruktur 7 in der teilweise organischen Schicht 4 aufgebracht wurde. Bei der Schutzschicht 8 kann es sich insbesondere um eine Schicht aus SiO₂ handeln. Die Schutzschicht 8 weist vorzugsweise eine Dicke von 50 nm oder weniger auf. Durch die Schutzschicht 8 wird die Nanostruktur 7 vorteilhaft vor äußeren Einflüssen, insbesondere vor einer mechanischen Beschädigung, geschützt.

In Figur 3 ist die Reflexion R in Abhängigkeit von der Wellenlänge λ bei einem Ausführungsbeispiel eines mit dem Verfahren gemäß der Erfindung hergestellten reflexionsmindernden Interferenzschichtsystems für die Einfallswinkel 0° und 45° dargestellt. Das der Berechnung zugrunde liegende Schichtsystem ist wie das in Figur 2 dargestellte Ausführungsbeispiel aufgebaut und weist ausgehend von einem Substrat mit einem Brechungsindex n = 1,5 folgende Schichtfolge auf: 5 H, 110 L, 2,5 H, 140 X. Hier und im Folgenden wird "H" als Abkürzung für eine Schicht mit hohem Brechungsindex (n = 2,3) aus TiO₂ verwendet. Die Abkürzung "L" steht für eine Schicht mit geringem Brechungsindex (n = 1,46) aus SiO₂. Weiterhin wird die Abkürzung "X" für eine nanostrukturierte Schicht mit einem effektiven Brechungsindex n = 1,2 verwendet. Die Zahlen vor den als Abkürzung verwendeten Buchstaben geben jeweils die Schichtdicke in Nanometer an. Figur 3 verdeutlicht, dass mit dem angegebenen reflexionsmindernden Interferenzschichtsystem im Wellenlängenbereich von etwa 400 nm bis etwa 700 nm sowohl bei einem Einfallswinkel von 0° als auch bei einem Einfallswinkel von 45° jeweils eine Reflexion R < 0,5 % erzielt werden kann.

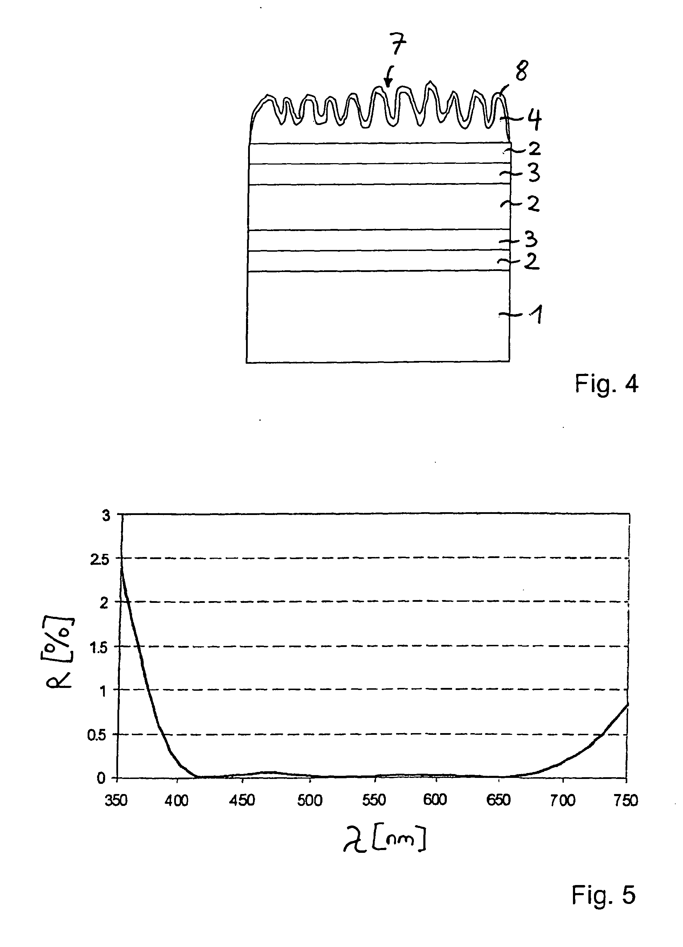

Das in Figur 4 dargestellte weitere Ausführungsbeispiel eines mit dem Verfahren gemäß der Erfindung hergestellten reflexionsmindernden Interferenzschichtsystems weist im Vergleich zu dem in Figur 2 dargestellten Ausführungsbeispiel zwei zusätzliche alternierende Schichten auf. Ausgehend vom Substrat 1 enthält das Schichtsystem eine Schicht 2 mit hohem Brechungsindex, eine Schicht 3 mit niedrigem Brechungsindex, eine weitere Schicht 2 mit hohem Brechungsindex, eine weitere Schicht 3 mit niedrigem Brechungsindex, eine weitere Schicht 2 mit hohem Brechungsindex, und darauf die nanostrukturierte teilweise organische Schicht 4, die wie das in Figur 2 dargestellte Ausführungsbeispiel mit einer Schutzschicht 8 versehen ist. Eine Erhöhung der Anzahl der alternierenden Schichten in dem reflexionsmindernden Interferenzschichtsystem hat den Vorteil, dass sich die Anzahl der optimierbaren Parameter des Schichtsystems erhöht und somit eine noch geringe Reflexion in einem gewünschten Spektralbereich erzielt werden kann.

In Figur 5 ist die Reflexion R in Abhängigkeit von der Wellenlänge λ für den Einfallswinkel 0° bei einem Ausführungsbeispiel eines mit dem Verfahren gemäß der Erfindung hergestellten reflexionsmindernden Interferenzschichtsystems dargestellt, das wie das in Figur 4 dargestellte Ausführungsbeispiel aufgebaut ist. Das Schichtsystem hat folgenden Schichtaufbau: 34 H, 32 L, 111 H, 34 L, 11 H, 100 X. Die als Abkürzung verwendeten Buchstaben H, L und X haben dabei die gleiche Bedeutung wie bei dem in Figur 3 dargestellten Ausführungsbeispiel, und die Zahlen vor den Buchstaben geben die Schichtdicke der einzelnen Schichten in Nanometer an. Der in Figur 5 dargestellte Verlauf der Reflexion R verdeutlicht, dass in einem Wellenlängenbereich von etwa 400 nm bis etwa 700 nm eine Reflexion R < 0,1 % erzielt werden kann.

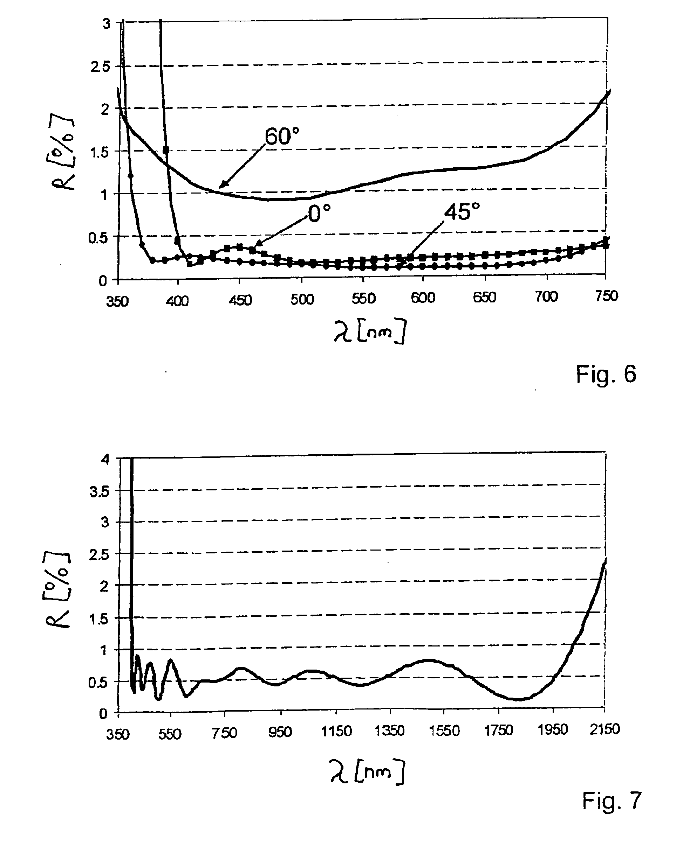

In Figur 6 ist die Reflexion R in Abhängigkeit von der Wellenlänge λ bei einem weiteren Ausführungsbeispiel eines mit dem Verfahren gemäß der Erfindung hergestellten reflexionsmindernden Interferenzschichtsystems dargestellt. Das Schichtsystem hat unter Verwendung der Abkürzungen wie bei den vorherigen Ausführungsbeispielen folgenden Schichtaufbau: 9 H, 55 L, 32 H, 29 L, 46 H, 51 L, 16 H, 149 X. Die Anzahl der alternierenden Schichten ist also im Vergleich zu dem in Figur 5 dargestellten Ausführungsbeispiel nochmals um zwei Schichten erhöht worden. Die drei Kurven in Figur 6, die die Reflexion für die Einfallswinkel 0°, 45° und 60° darstellen, verdeutlichen, das mit einem derartigen reflexionsmindernden Interferenzschichtsystem für diese Einfallswinkel im Wellenlängenbereich von etwa 400 nm bis etwa 700 nm eine Reflexion R < 1,5 % erzielt werden kann.

Figur 7 zeigt eine grafische Darstellung der Reflexion R in Abhängigkeit von der Wellenlänge λ für den Einfallswinkel 0° bei einem weiteren Ausführungsbeispiel eines mit dem Verfahren gemäß der Erfindung hergestellten reflexionsmindernden Interferenzschichtsystems. Das Schichtsystem weist insgesamt 13 alternierende Schichten auf und hat unter Verwendung der bereits zuvor eingeführten Abkürzungen folgenden Schichtaufbau: 9 H, 71 L, 23 H, 46 L, 43 H, 20 L, 171 H, 19 L, 44 H, 46 L, 17 H, 151 L, 140 X. Die Grafik in Figur 7 verdeutlicht, dass mit diesem Schichtsystem im Wellenlängenbereich von etwa 400 nm bis etwa 2000 nm bei einem Einfallswinkel von 0° eine Reflexion von weniger als 1 % erzielt werden kann.

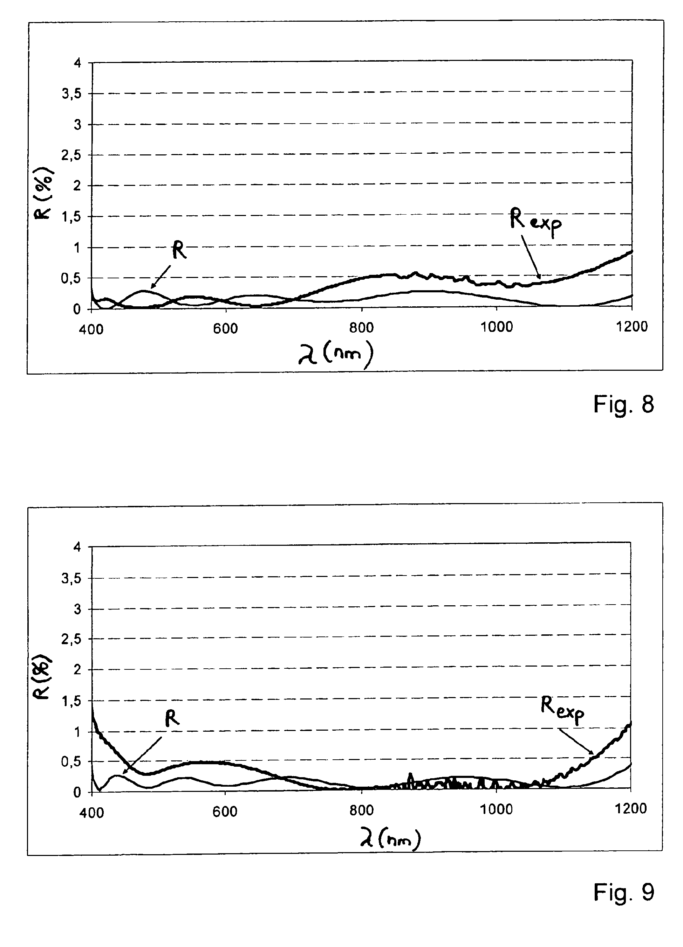

Figur 8 zeigt eine grafische Darstellung der berechneten Reflexion R und der gemessenen Reflexion Rₑₓₚ in Abhängigkeit von der Wellenlänge λ für den Einfallswinkel 0° bei einem weiteren Ausführungsbeispiel eines mit dem Verfahren gemäß der Erfindung hergestellten reflexionsmindernden Interferenzschichtsystems. Das Schichtsystem weist insgesamt 8 alternierende Schichten auf und hat folgenden Schichtaufbau: 10 H, 62 L, 24 H, 51 L, 28 H, 53 L, 15 H, 280 X. Die Abkürzung H steht in diesem Fall für eine hochbrechende Schicht aus Ta₂O₅ (n = 2,3) und die Abkürzung L für eine niedrigbrechende Schicht aus SiO₂ (n = 1,46). X steht für eine nanostrukturierte Schicht aus PMMA.

Zur Herstellung des Schichtsystems wurden die 7 alternierenden Oxidschichten H und L mittels Aufdampfen nacheinander in einer Vakuumanlage (Typ Leybold APS904) auf ein Glassubstrat abgeschieden. Die PMMA-Schicht wurde nachfolgend außerhalb der Vakuumkammer aus einer Lösung (Granulat gelöst in Methylenchlorid) mittels Spincoaten mit einer Dicke von etwa 600 nm aufgebracht. Anschließend wurde die Probe wieder in die Vakuumanlage transferiert und dort mittels einer Ionenquelle (Typ Leybold APS) bei einer maximalen Ionenenergie von 120 eV unter Zugabe von Sauerstoff als Reaktivgas für 500 s geätzt. Die nach dieser Plasmastrukturierung verbleibende PMMA-Schicht X weist eine Gesamtdicke von 280 nm auf.

Die Grafik in Figur 8 verdeutlicht, dass mit diesem Schichtsystem im Wellenlängenbereich von etwa 400 nm bis etwa 1200 nm bei einem Einfallswinkel von 0° eine Reflexion von weniger als 0,5 % erzielt werden kann.

Figur 9 zeigt eine grafische Darstellung der berechneten Reflexion R und der gemessenen Reflexion Rₑₓₚ in Abhängigkeit von der Wellenlänge λ für den Einfallswinkel 0° bei einem weiteren Ausführungsbeispiel eines mit dem Verfahren gemäß der Erfindung hergestellten reflexionsmindernden Interferenzschichtsystems. Das Schichtsystem weist insgesamt 10 alternierende Schichten auf und hat folgenden Schichtaufbau: 11 H, 51 L, 29 H, 24 L, 149 H, 26 L, 21 H, 86 L, 120 X, 40 L. Die Abkürzung H steht in diesem Fall für eine hochbrechende Schicht aus Ta₂O₅ (n = 2,3) und die Abkürzung L für eine niedrigbrechende Schicht aus SiO₂ (n = 1,46). X steht für eine nanostrukturierte Schicht aus Melamin (2,4,6-Triamino-1,3,5-triazin).

Zur Herstellung des Schichtsystems wurden die 7 alternierenden Oxidschichten H und L mittels Aufdampfen nacheinander in einer Vakuumanlage (Typ Leybold APS904) auf ein Glassubstrat abgeschieden. Die Melaminschicht wurde nachfolgend ebenfalls in der Vakuumkammer durch thermisches Aufdampfen mit einer Dicke von etwa 300 nm aufgebracht. Anschließend wurde die Probe in der Vakuumanlage mittels einer Ionenquelle (Typ Leybold APS) bei einer maximalen Ionenenergie von 120 eV unter Zugabe von Sauerstoff als Reaktivgas für 200 s geätzt. Die nach dieser Plasmastrukturierung verbleibende Melaminschicht X weist eine Gesamtdicke von etwa 120 nm auf. Auf die strukturierte Melaminschicht wurde nachfolgend eine als Schutzschicht dienende weitere SiO₂-Schicht aufgebracht, die etwa 40 nm dick ist. Vorteilhaft wurde somit das gesamte Schichtsystem in einem Vakuumprozess hergestellt.

Die Grafik in Figur 9 verdeutlicht, dass mit diesem Schichtsystem im Wellenlängenbereich von etwa 400 nm bis etwa 1200 nm bei einem Einfallswinkel von 0° eine Reflexion von weniger als 0,5 % erzielt werden kann.

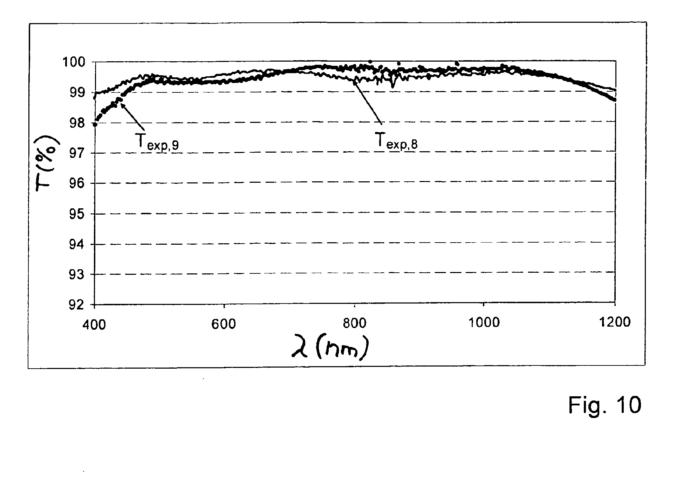

In Figur 10 sind die gemessene Transmission T_{exp,8} des Ausführungsbeispiels der Figur 8 und die gemessene Transmission T_{exp.9} des Ausführungsbeispiels der Figur 9 dargestellt. Die Schichtsysteme der Ausführungsbeispiele sind vorteilhaft hochtransparent Im Spektralbereich von etwa 400 nm bis etwa 1200 nm beträgt die Transmission T_{exp,8} mehr als 99% und die Transmission Tₑₓₚ,₉ mehr als 98%.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Verfahren zur Herstellung eines reflexionsmindernden Interferenzschichtsystems, **gekennzeichnet durch** die Verfahrensschritte:
- Aufbringen von mindestens drei alternierenden Schichten (2, 3) mit unterschiedlichem Brechungsindex auf ein Substrat,
- Aufbringen einer Schicht (4) aus einem organischen Material oder einem organisch-anorganischem Hybridmaterial,
- Erzeugung einer Nanostruktur (7) in der Schicht (4) aus dem organischen Material oder dem organisch-anorganischem Hybridmaterial mit einem Plasmaätzprozess, wobei die nanostrukturierte Schicht (4) einen effektiven Brechungsindex n < 1,3 aufweist.

2. Verfahren nach Anspruch 1,
wobei die alternierenden Schichten (2, 3) und die Schicht (4) aus dem organischen Material oder dem organisch-anorganischem Hybridmaterial jeweils durch ein Vakuumbeschichtungsverfahren aufgebracht werden.

3. Verfahren nach Anspruch 1 oder 2,
wobei vor der Erzeugung der Nanostruktur (7) eine dünne Schicht (5) auf die Schicht (4) aus dem organischen Material oder dem organisch-anorganischem Hybridmaterial aufgebracht wird.

4. Verfahren nach Anspruch 3,
wobei die dünne Schicht (5) eine Oxidschicht, eine Nitridschicht oder eine Fluoridschicht ist.

5. Verfahren nach Anspruch 3 oder 4,
wobei die dünne Schicht (5) Siliziumoxid, Siliziumnitrid, Titanoxid oder Magnesiumfluorid enthält.

6. Verfahren nach einem der Ansprüche 3 bis 5,
wobei die dünne Schicht (5) eine mittlere Dicke von 2 nm oder weniger aufweist.

7. Verfahren nach einem der vorhergehenden Ansprüche,
wobei die nanostrukturierte Schicht (4) eine Dicke zwischen einschließlich 50 nm und einschließlich 150 nm aufweist.

8. Verfahren nach einem der vorhergehenden Ansprüche,
wobei sich die Nanostruktur (7) von der Oberfläche der nanostrukturierten Schicht (4) aus bis in eine Tiefe von 25 nm oder mehr in die nanostrukturierte Schicht (4) hinein erstreckt.

9. Verfahren nach einem der vorhergehenden Ansprüche,
wobei die nanostrukturierte Schicht (4) Hexamethyldisiloxan (HMDSO), Allylamin, Allylalkohol, Vilylacetat, Styrol, Parylen, Ormocer, polyurethanhaltigen Lack, Polyamid, Polymethylmethacrylat (PMMA), Silikon, Pentacen, Polytetrafluorethylen (PTFE), Melamin, alpha-NPD, NNB oder TNP enthält.

10. Verfahren nach einem der vorhergehenden Ansprüche,
wobei die nanostrukturierte Schicht (4) ein organisches Material, in das anorganische Nanopartikel eingebettet sind, enthält.

11. Verfahren nach einem der vorhergehenden Ansprüche,
wobei die nanostrukturierte Schicht (4) mit einer Schutzschicht (8) versehen wird.

12. Verfahren nach Anspruch 11,
wobei die Schutzschicht (8) eine SiO₂-Schicht ist.

13. Verfahren nach Anspruch 11 oder 12,
wobei die Schutzschicht (8) eine Dicke von 50 nm oder weniger aufweist.

14. Verfahren nach einem der vorhergehenden Ansprüche,
wobei die Anzahl der alternierenden Schichten (2, 3) mindestens fünf beträgt.

15. Verfahren nach einem der vorhergehenden Ansprüche,
wobei die alternierenden Schichten anorganische Schichten sind.

## Claims

1. Method for producing a reflection-reducing interference layer system, **characterized by** the following method steps:
- applying at least three alternating layers (2, 3) having different refractive indices to a substrate,
- applying a layer (4) of an organic material or an organic-inorganic hybrid material,
- creating a nanostructure (7) in the layer (4) of the organic material or the organic-inorganic hybrid material by a plasma etching process, wherein the nanostructured layer (4) has an effective refractive index n < 1.3.

2. Method according to Claim 1,
wherein the alternating layers (2, 3) and the layer (4) of the organic material or the organic-inorganic hybrid material are applied in each case by a vacuum coating method.

3. Method according to Claim 1 or 2,
wherein, before the nanostructure (7) is created, a thin layer (5) is applied to the layer (4) of the organic material or the organic-inorganic hybrid material.

4. Method according to Claim 3,
wherein the thin layer (5) is an oxide layer, a nitride layer or a fluoride layer.

5. Method according to Claim 3 or 4,
wherein the thin layer (5) contains silicon oxide, silicon nitride, titanium oxide or magnesium fluoride.

6. Method according to one of Claims 3 to 5,
wherein the thin layer (5) has a mean thickness of 2 nm or less.

7. Method according to one of the preceding claims,
wherein the nanostructured layer (4) has a thickness of between 50 nm and 150 nm inclusive.

8. Method according to one of the preceding claims, wherein the nanostructure (7) extends from the surface of the nanostructured layer (4) down to a depth of 25 nm or more into the nanostructured layer (4).

9. Method according to one of the preceding claims,
wherein the nanostructured layer (4) contains hexamethyldisiloxane (HMDSO), allylamine, allyl alcohol, vilyl acetate, styrene, parylene, Ormocer, polyurethane-containing resist, polyamide, polymethyl methacrylate (PMMA), silicone, pentacene, polytetrafluoroethylene (PTFE), melamine, alpha-NPD, NNB or TNP.

10. Method according to one of the preceding claims,
wherein the nanostructured layer (4) contains an organic material in which inorganic nanoparticles are embedded.

11. Method according to one of the preceding claims,
wherein the nanostructured layer (4) is provided with a protective layer (8).

12. Method according to Claim 11,
wherein the protective layer (8) is an SiO₂ layer.

13. Method according to Claim 11 or 12,
wherein the protective layer (8) has a thickness of 50 nm or less.

14. Method according to one of the preceding claims,
wherein the number of alternating layers (2, 3) is at least five.

15. Method according to one of the preceding claims,
wherein the alternating layers are inorganic layers.

## Revendications

1. Procédé de fabrication d'un système de couches d'interférence diminuant la réflexion, le procédé étant **caractérisé par** les étapes qui consistent à :
- appliquer sur un substrat au moins trois couches (2, 3) alternées qui présentent des indices de réfraction différents,
- appliquer une couche (4) en matériau organique ou un matériau hybride organique-minéral,
- former une nanostructure (7) de la couche (4) constituée du matériau organique ou du matériau hybride organique-minéral à l'aide d'une opération de gravure au plasma, la couche nanostructurée (4) présentant un indice de réfraction effectif n < 1,3.

2. Procédé selon la revendication 1, dans lequel les couches alternées (2, 3) et la couche (4) en matériau organique ou en matériau hybride organique-minéral sont toutes appliquées par une opération de revêtement sous vide.

3. Procédé selon les revendications 1 ou 2, dans lequel avant la formation de la nanostructure (7), une mince couche (5) est appliquée sur la couche (4) en matériau organique ou en matériau hybride organique-minéral.

4. Procédé selon la revendication 3, dans lequel la couche mince (5) est une couche d'oxyde, une couche de nitrure ou une couche de fluorure.

5. Procédé selon les revendications 3 ou 4, dans lequel la couche mince (5) contient de l'oxyde de silicium, du nitrure de silicium, de l'oxyde de titane ou de fluorure de magnésium.

6. Procédé selon l'une des revendications 3 à 5, dans lequel la couche mince (5) présente une épaisseur moyenne de 2 nm ou moins.

7. Procédé selon l'une des revendications précédentes, dans lequel la couche nanostructurée (4) présente une épaisseur comprise entre 50 nm inclus et 150 nm inclus.

8. Procédé selon l'une des revendications précédentes, dans lequel la nanostructure (7) s'étend depuis la surface de la couche nanostructurée (4) jusqu'à une profondeur de 25 nm ou davantage dans la couche nanostructurée (4).

9. Procédé selon l'une des revendications précédentes, dans lequel la couche nanostructurée (4) contient de l'hexaméthyldisiloxane (HMDSO), de l'allylamine, de l'alcool allylique, de l'acétate de vinyle, du styrène, du parylène, de l'ormocer, un vernis contenant du polyuréthane, du polyamide, du poly(méthacrylate de méthyle) (PMMA), du silicone, du pentacène, du polytétrafluoroéthylène (PTFE), de la mélamine, de l'alpha-NPD, du NNB ou du TNP.

10. Procédé selon l'une des revendications précédentes, dans lequel la couche nanostructurée (4) contient un matériau organique dans lequel des nanoparticules minérales sont incorporées.

11. Procédé selon l'une des revendications précédentes, dans lequel la couche nanostructurée (4) est dotée d'une couche de protection (8).

12. Procédé selon la revendication 11, dans lequel la couche de protection (8) est une couche de SiO₂.

13. Procédé selon les revendications 11 ou 12, dans lequel la couche de protection (8) présente une épaisseur de 50 nm ou moins.

14. Procédé selon l'une des revendications précédentes, dans lequel le nombre des couches (2, 3) alternées est d'au moins cinq.

15. Procédé selon l'une des revendications précédentes, dans lequel les couches alternées sont des couches minérales.
